# EUROPÄISCHE PATENTANMELDUNG

(11) **EP 0 633 154 A1**
(43) Veröffentlichungstag der Anmeldung: **11.01.1995**
(21) Anmeldenummer: 94108905.4
(22) Anmeldetag: 10.06.1994
(51) Int. Cl.: B60H 1/04

(54) **Kraftfahrzeug-Wärmespeicher**

(30) Priorität: 09.07.1993 DE 4322899
(71) Anmelder: FRITZ WERNER, PRÄZISIONSMASCHINENBAU GmbH, D-65366 Geisenheim (DE)
(72) Erfinder: Boltz, Hartmut, Dipl.-Ing., D-56321 Brey (DE); Jakobi, Karl-Josef, Dr., D-65366 Geisenheim (DE)
(74) Vertreter: Andrejewski, Walter, Dr.

(57) **Zusammenfassung**

Kraftfahrzeug-Wärmespeicher mit einem Innenbehälter (1), einem Außenbehälter (2) und einem Wärmeisolationsraum (3) zwischen Innenbehälter (1) und Außenbehälter (2). Im Innenbehälter (1) ist ein Paket aus im Grundriß rechteckigen, flachen Latentwärmespeicherzellen (4) aus dünnem Blech angeordnet. Zwischen den einzelnen Latentwärmespeicherzellen (4) sind mit Hilfe von Abstandsspaltgittern (5) Abstandszwischenräume (6) ausgebildet, die im Betriebszustand von Kühlwasser als Wärmeträger durchflossen werden. Die Abstandsspaltzwischenräume besitzen eine Spaltdicke im Bereich zwischen 1 bis 3 mm. Die Latentwärmespeicherzellen (4) besitzen eine Zellendicke im Bereich von 5 mm bis 8 mm und außenseitig eine glatte Oberfläche geringer Rauhigkeit. Das Paket der Latentwärmespeicherzellen (4) besitzt eine Speicherkapazität von zumindest 400 Wattstunden bei einer Speichertemperatur von zumindest 70° C. Die Spaltdicke und die Zellendicke sind so aufeinander abgestimmt, daß der Latentwärmespeicher sich aus der Speichertemperatur mit einer Entladegeschwindigkeit von zumindest 100 Wattstunden/min entlädt. Freie Gitterelemente (9) sind so angeordnet, daß bei der zu der Entladungsgeschwindigkeit gehörenden Strömungsgeschwindigkeit des Kühlwassers an den freien Gitterelementen (9) eine turbulente Strömung entsteht. An den Latentwärmespeicherzellen (4) anliegende Gitterelemente (9) nehmen die aus der Phasenumwandlung des Speichermediums resultierenden Volumenänderungen der Latentwärmespeicherzellen ausgleichend auf, ohne die Turbulenzbildung an den freien Gitterelementen zu beeinträchtigen.

## Beschreibung

Die Erfindung betrifft einen Kraftfahrzeug-Wärmespeicher mit einem Innenbehälter, einem Außenbehälter und einem Wärmeisolationsraum zwischen Innenbehälter und Außenbehälter, wobei im Innenbehälter ein Paket aus im Grundriß rechteckigen, flachen Latentwärmespeicherzellen aus dünnem Blech und zwischen den einzelnen Latentwärmespeicherzellen mit Hilfe von Abstandsgittern Abstandszwischenräume ausgebildet sind, die im Betriebszustand von Kühlwasser als Wärmeträger durchflossen sind, wobei in den Latentwärmespeicherzellen ein Wärmespeichermedium angeordnet ist.

Kraftfahrzeug-Wärmespeicher des beschriebenen Aufbaus sind in verschiedenen Ausführungsformen bekannt und insoweit bewährt. Sie dienen dazu, die Wärme zu speichern, die das Kühlwasser bei Betrieb eines Kraftfahrzeuges aufnimmt, um die gespeicherte Wärme bei Inbetriebnahme des Kraftfahrzeuges, insbesondere in kalten Zonen oder Jahreszeiten kurzfristig über das Kühlwasser an erwärmungsbedürftige Kraftfahrzeugteile wieder abzugeben. In Strenge müßte selbstverständlich von Wärmemengen gesprochen werden. Im praktischen Betrieb kommt es darauf an, eine große Speicherkapazität in einem volumenmäßig kleinen Kraftfahrzeug-Wärmespeicher unterzubringen, die Latentwärmespeicherzellen in sehr kurzen Zeitspannen zu entladen, damit das Kühlwasser die Entladungswärme kurzfristig dorthin fördern kann, wo sie benötigt wird, - und die Wärmespeicherzellen auch in kurzer Zeit auf ihre volle Speicherkapazität aufzuladen. Latentwärmespeicherzellen bezeichnet Wärmespeicherzellen, die für die Aufladung und Entladung eine Phasenumwandlung des Wärmespeichermediums ausnutzen. Das alles führt zu einem physikalisch komplexen Problemkreis, der noch durch fertigungstechnische Randbedingungen belastet ist, wenn es darauf ankommt, die Kraftfahrzeug-Wärmespeicher in einer möglichst flexiblen automatischen Fertigung in großer Stückzahl mit hoher Präzision und allen Anforderungen genügend produziert werden müssen.

Die Erfindung geht von dem vorstehend beschriebenen komplexen Problemkreis aus und löst ihn auf einfache Weise.

Zur Lösung dieses Problemkreises ist Gegenstand der Erfindung ein Kraftfahrzeug-Wärmespeicher mit einem Innenbehälter, einem Außenbehälter und einem Wärmeisolationsraum zwischen Innenbehälter und Außenbehälter, wobei im Innenbehälter ein Paket aus im Grundriß rechteckigen, flachen Latentwärmespeicherzellen aus dünnem Blech und zwischen den einzelnen Latentwärmespeicherzellen mit Hilfe von Abstandsspaltgittern Abstandszwischenräume ausgebildet sind, die im Betriebszustand von Kühlwasser als Wärmeträger durchflossen sind, wobei in den Latentwärmespeicherzellen ein Wärmespeichermedium angeordnet ist und wobei die Kombination der folgenden Merkmale verwirklicht ist:
a) Die Abstandsspaltzwischenräume besitzen eine Spaltdicke im Bereich zwischen 1 bis 3 mm,
b) die Latentwärmespeicherzellen besitzen eine Zellendicke im Bereich von 5 mm bis 8 mm und außenseitig eine glatte Oberfläche geringer Rauhigkeit,
c) das Paket der Latentwärmespeicherzellen besitzt eine Speicherkapazität von zumindest 400 Wattstunden bei einer Speichertemperatur von zumindest 70° C,
d) die Abstandsspaltgitter besitzen an den Latentwärmespeicherzellen anliegende Gitterelemente, die in Strömungsrichtung des Kühlwassers verlaufen, und quer dazu verlaufende freie Gitterelemente,
wobei die Spaltdicke und die Zellendicke so aufeinander abgestimmt sind, daß der Latentwärmespeicher sich aus der Speichertemperatur mit einer Entladegeschwindigkeit von zumindest 100 Wattstunden/min entlädt, wobei die freien Gitterelemente so angeordnet sind, daß bei der zu der Entladungsgeschwindigkeit gehörenden Strömungsgeschwindigkeit des Kühlwassers an den freien Gitterelementen eine turbulente Strömung entsteht, und wobei die an den Latentwärmespeicherzellen anliegenden Gitterelemente die aus der Phasenumwandlung des Speichermediums resultierenden Volumenänderungen der Latentwärmespeicherzellen ausgleichend aufnehmen, ohne die Turbulenzbildung an den freien Gitterelementen zu beeinträchtigen. Vorzugsweise besitzen die Latentwärmespeicherzellen eine Zellendicke von mehr als 6 mm. Vorzugsweise liegt die Entladegeschwindigkeit im Bereich zwischen 100 und 150 Wattstunden/min, z. B. bei 125 Wattstunden/min.

Bei einer bevorzugten Ausführungsform ist die Anordnung so getroffen, daß bei der Entladung in zwei Minuten zumindest 50 % der gespeicherten Wärmemenge an das Kühlwasser abgegeben werden. Es versteht sich, daß sich diese Aussage auf die maximal gespeicherte Wärmemenge bezieht. Im Rahmen der Erfindung kann mit den verschiedensten Wärmespeichermedien gearbeitet werden, die in dem durch die Kühlwassertemperatur vorgegebenen Temperaturbereich über Phasenumwandlung wie im Anspruch 1 angegeben, vorzugsweise wie in den Ansprüche 1 und 2 angegeben, funktionieren. Bei einer bewährten Ausführungsform weisen die Latentwärmespeicherzellen Bariumhydroxid-Oktahydrat oder Mischungen davon auf Bariumhydroxid-Oktahydrat als Speichermedium auf.

Die Erfindung beruht auf der Erkenntnis, daß die Entladung eines Latentwärmespeichers in einer kurzen Zeitspanne nicht nur davon abhängig ist, daß die Speicherkapazität dem den Latentwärmespeicher beim Entladevorgang durchfließenden Kühlwassermengenstrom angepaßt ist. Es müssen vielmehr die hydrodynamischen Phänomene in bezug auf die Strömung des Kühlwassers im Kraftfahrzeug-Latentwärmespeicher, die Phasenänderung des Speichermediums und der Wärmeübergang der bei der Phasenänderung in der Latentwärmespeicherzelle freiwerdenden Umwandlungswärme besonders eingerichtet werden. Das erreicht die Erfindung durch die Kombination der Merkmale a), b) und c), die ihrerseits von der Speicherkapazität und den thermodynamischen Potentialen der verschiedenen Wärmeübergänge abhängen. Die Zellendicke und damit das Volumen des Speichermediums in den einzelnen Latentwärmespeicherzellen werden so gewählt, daß die Anzahl der Wärmespeicherzellen in dem Kraftfahrzeug-Wärmespeicher möglichst klein ist, nichtsdestoweniger jedoch bei der entladenden Phasenumwandlung des Wärmeträgermediums die freiwerdende Wärme ausreichend schnell an die Oberfläche der Latentwärmespeicherzellen gelangt und dort an das Kühlwasser abgegeben werden kann. Entsprechend wird die Zellendicke im Rahmen des Merkmals b) eingerichtet. Dazu muß jedoch außerdem ein ausreichend großer Volumenstrom des Kühlwassers die Abstandszwischenräume durchströmen. Die Spaltdicke darf dazu im Rahmen des Merkmals a) nicht zu klein sein. Um nichtsdestoweniger eine für den Wärmeübergang positive turbulente Strömung des Spülwassers in den Abstandszwischenräumen sicherzustellen, sind die freien Gitterelemente als Turbulenzerzeuger im Sinne von Kármán ausgebildet, an denen Kármán'sche Wirbelstraßen entstehen. In bezug auf die Hydrodynamik muß die turbulente Strömung auch während der Zeit der Phasenumwandlung aufrechterhalten werden, weil die turbulente Strömung bei möglichst glatter Oberfläche der Latentwärmespeicherzellen den Wärmeübergang aus den Latentwärmespeicherzellen auf das Kühlwasser und umgekehrt wesentlich verbessert und gerade bei der Phasenumwandlung die Phasenumwandlungswärme frei wird, die abgeführt werden muß. Folglich darf der Wärmeübergang durch störende Strähnenbildung in dem Kühlwasser im Bereich der Oberflächen der Latentwärmespeicherzellen nicht beeinträchtigt werden. Die Oberfläche der Latentwärmespeicherzellen wird so glatt ausgeführt, daß sich dort eine gleichsam haftende Schicht des Kühlwassers nicht ausbilden kann, weil diese den Wärmeübergang beeinträchtigt. Die bei der Phasenänderung auftretenden Volumenänderungen des Speichermediums und damit der Latentwärmespeicherzellen, die regelmäßig etwa 10 %, betragen dürfen die Turbulenz in dem in den Abstandsspalten fließenden Kühlwasser nicht störend beeinträchtigen. Das wäre der Fall, wenn die anliegenden Gitterelemente von den Oberflächen der Latentwärmespeicherzellen freikommen und folglich ein Teilstrom des Kühlwassers an den als Turbulenzerzeuger ausgelegten freien Gitterelementen vorbeiströmen könnte. All dies erreicht die Erfindung in Kombination mit den weiteren Merkmalen und in Kombination mit der Abstimmung durch das Merkmal d). Die erforderliche Abstimmung führt der Fachmann auf Basis der erfindungsgemäßen Offenbarung im Labor ohne Schwierigkeiten aus. Überraschenderweise reicht die in Kraftfahrzeug-Kühlkreisläufen installierte Leistung der Kühlwasserpumpe im allgemeinen aus, um auch den Druckverlust zu überwinden, der in einem erfindungsgemäßen Kraftfahrzeug-Wärmespeicher üblicherweise auftritt.

Im einzelnen bestehen im Rahmen der Erfindung mehrere Möglichkeiten der weiteren Ausbildung und Gestaltung eines erfindungsgemäßen Kraftfahrzeug-Wärmespeichers. So sind die Latentwärmespeicherzellen in dem Innenbehälter zweckmäßigerweise im wesentlichen horizontal angeordnet. Die Latentwärmespeicherzellen bestehen zweckmäßigerweise aus dünnem Kupferblech, welches die aus der Phasenumwandlung resultierenden Verformungen ohne weiteres mitmacht. Für einen üblichen Personenkraftwagen mit größerer oder kleinerer, jedoch üblicher Leistung, hat es sich bewährt, die zahlenmäßigen Parameter so einzurichten, wie es den Patentansprüchen 6 bis 10 entspricht. Aus den vorstehenden Darlegungen ergibt sich, daß dem Strömungsverhalten des Kühlwassers in den Abstandsspaltzwischenräumen besondere Bedeutung zukommt. In diesem Zusammenhang empfiehlt es sich, die freien Gitterelemente so auszubilden und anzuordnen, daß sich in der Kühlflüssigkeit beim Durchströmen des Kraftfahrzeug-Wärmespeichers ein Spektrum homogener isotroper Turbulenz ausbildet. Darunter wird verstanden, daß die gleichsam als Kármán'sche Wirbelstraßen an den freien Gitterelementen entstehenden Wirbel Wirbelballen gleichen Durchmessers aufweisen, die zwar in der Strömung des Kühlwassers energetisch abklingen und dabei ihren Durchmesser reduzieren, jedoch an den freien Gitterelementen immer wieder neu gebildet werden, so daß die statistische Verteilung konstant ist. Vorzugsweise ist die Anordnung fernerhin so getroffen, daß die freien Gitterelemente sowie die anliegenden Gitterelemente runde Querschnitte und/oder rechteckige Querschnitte mit verrundeten Ecken aufweisen und die Kreuzungsecken zwischen den freien Gitterelementen und den anliegenden Gitterelementen ebenfalls Verrundungen besitzen. Auf diese Weise wird sichergestellt, daß sich im Strom der Kühlflüssigkeit in den Abstandszwischenräumen Nester, genauer Totwasserbereiche, mit gestörtem Wärmeübergang nicht ausbilden.

Im folgenden wird die Erfindung anhand einer lediglich ein Ausführungsbeispiel darstellenden Zeichnung ausführlicher erläutert. Es zeigen in schematischer Darstellung
- Fig. 1: einen Längsschnitt durch einen erfindungsgemäßen Kraftfahrzeug-Wärmespeicher parallel zu den Latentwärmespeicherzellen gesehen,
- Fig. 2: einen Schnitt in Richtung A-A durch den Gegenstand nach Fig. 1,
- Fig. 3: den gegenüber der Fig. 2 wesentlich vergrößerten Ausschnitt B aus dem Gegenstand der Fig 2,
- Fig. 4: eine Draufsicht auf ein Abstandsspaltgitter aus dem Kraftfahrzeug-Wärmespeicher der Fig. 1 und
- Fig. 5: eine graphische Darstellung, die die thermodynamischen Zusammenhänge bei einem erfindungsgemäßen Kraftfahrzeug-Wärmespeicher erläutert.

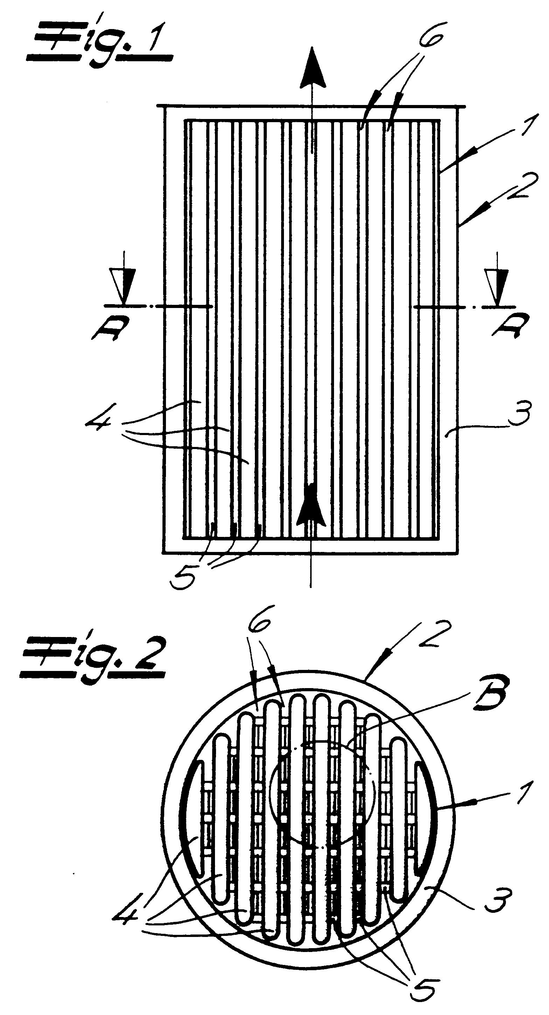

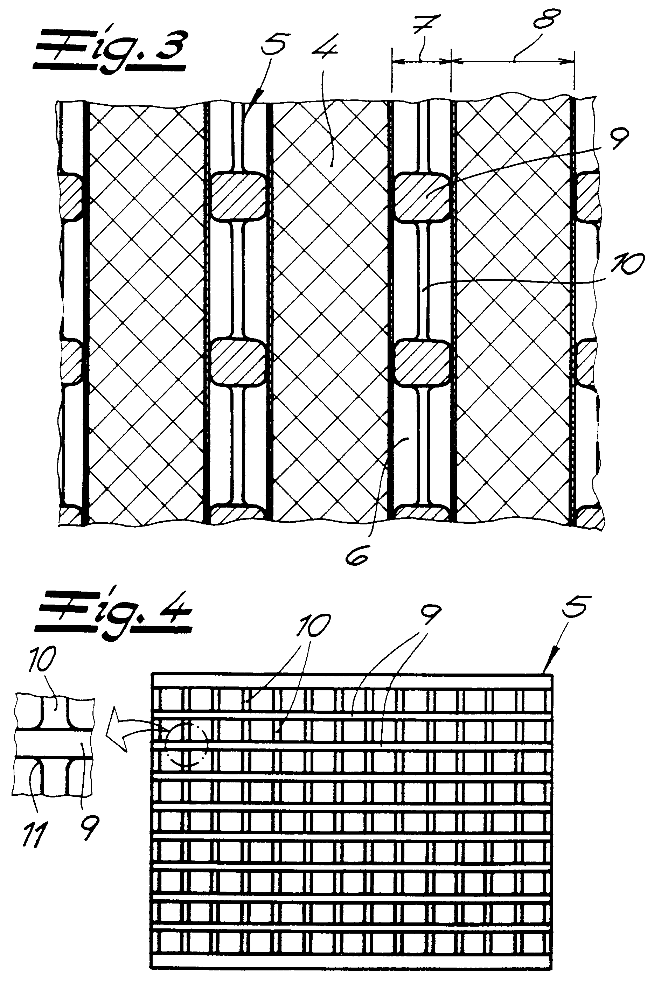

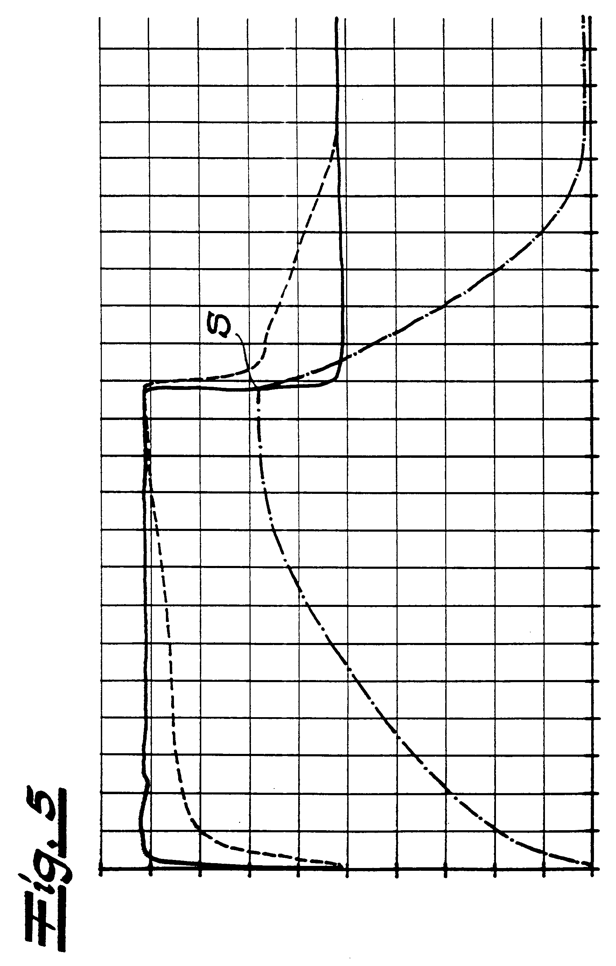

Der in den Figuren dargestellte Kraftfahrzeug-Wärmespeicher ist ein Latentwärmespeicher und besitzt einen Innenbehälter 1, einen Außenbehälter 2 und einen Wärmeisolationsraum 3 zwischen Innenbehälter 1 und Außenbehälter 2. Es versteht sich, daß der Innenbehälter 1 im Außenbehälter 2 mechanisch befestigt ist. Das wurde im einzelnen nicht gezeichnet. Bei der Wärmeisolierung mag es sich um eine Unterdruck-Wärmeisolierung handeln. Aus einer vergleichenden Betrachtung der Fig. 1 bis 3 entnimmt man, daß dem Innenbehälter 1 ein Paket aus dem Grundriß rechteckigen, flachen Latentwärmespeicherzellen 4 aus dünnem Blech angeordnet ist und daß zwischen den einzelnen Latentwärmespeicherzellen 4 mit Hilfe von Abstandshaltergittern 5 Abstandszwischenräume 6 ausgebildet sind. Insoweit wird auch auf die Fig. 4 verwiesen. Die Abstandszwischenräume 6 sind im Betriebszustand von Kühlwasser als Wärmeträger durchflossen. In den Latentwärmespeicherzellen 4 befindet sich ein Wärmespeichermedium. Die Abstandsspaltzwischenräume 6 besitzen eine Spaltdicke 7, wie es in den Patentansprüchen 1 und 7 angegeben ist. Die Latentwärmespeicherzellen 4 besitzen eine Zellendicke 8, wie es in den Ansprüchen 1 und 8 angegeben ist. Sie besitzen außenseitig eine glatte Oberfläche möglichst geringer Rauhigkeit. Das Paket der Latentwärmespeicherzellen 4 muß eine ausreichende Speicherkapazität aufweisen. Sie soll zumindest 400 Wattstunden bei einer Speichertemperatur von zumindest 70° C besitzen. Aus einer vergleichenden Betrachtung der Figuren 3 und 4 entnimmt man, daß die Abstandsspaltgitter 5 an den Latentwärmespeicherzellen 4 anliegende Gitterelemente 9, die in Strömungsrichtung des Kühlwassers verlaufen, und quer dazu verlaufende freie Gitterelemente 10 besitzen.

Im übrigen ist eine besondere Abstimmung verwirklicht. Die Spaltdicke 7 und die Zellendicke 8 sind so aufeinander abgestimmt, daß der Latentwärmespeicher sich aus der Speichertemperatur mit einer Entladegeschwindigkeit von zumindest 100 Wattstunden/min entlädt, wobei die freien Gitterelemente 10 so angeordnet sind, daß bei der aus der Entladegeschwindigkeit resultierenden Strömungsgeschwindigkeit des Kühlwassers an den freien Gitterelementen 10 eine turbulente Strömung entsteht, während die an den Latentwärmespeicherzellen 4 anliegenden Gitterelemente 9 die aus der Phasenumwandlung des Speichermediums resultierenden Volumenänderungen der Latentwärmespeicherzellen 4 ausgleichend aufnehmen, so daß die Turbulenzbildung an den freien Gitterelementen 10 nicht beeinträchtigt wird. Vorzugsweise ist die Anordnung so getroffen, daß bei der Entladung in zwei Minuten zumindest 50 % der gespeicherten Wärmemenge an das Kühlwasser abgegeben werden. Es mag sich im Ausführungsbeispiel um einen Kraftfahrzeug-Wärmespeicher handeln, bei dem die Latentwärmespeicherzellen Bariumhydroxid-Oktahydrat oder Mischungen davon auf Basis von Bariumhydroxid-Oktahydrat als Speichermedium aufweisen.

Im Ausführungsbeispiel und nach bevorzugter Ausführungsform der Erfindung sind die Latentwärmespeicherzellen 4 in dem Innenbehälter im wesentlichen horizontal angeordnet. Sie mögen aus dünnem Kupferblech der im Patentanspruch 6 angegebenen Dicke bestehen. Es läßt sich erreichen, daß die Entladegeschwindigkeit zumindest etwa 120 Wattstunden/min beträgt.

Wie bereits erwähnt, sind die freien Gitterelemente 10 als Turbulenzerzeuger ausgebildet. Wegen der aus den Figuren entnehmbaren Symmetrie läßt sich erreichen, daß sich in der Kühlflüssigkeit ein Spektrum homogener isotroper Turbulenz ausbildet, deren Turbulenzballen gleichsam als Kármán'sche Wirbelstraßen an den freien Gitterelementen immer wieder entstehen. Das ist für den Wärmeübergang besonders günstig. Die freien Gitterelemente 10 sowie die anliegenden Gitterelemente 9 besitzen einen runden Querschnitt oder, wie gezeichnet, rechteckige Querschnitte mit verrundeten Ecken. Die Kreuzungsecken zwischen den freien Gitterelementen 10 und den anliegenden Gitterelementen 9 weisen ebenfalls Verrundungen 11 auf, um den Wärmeübergang beeinträchtigende "Totwasserbereiche" zu vermeiden.

Die Thermodynamik der Zusammenhänge ist in der Fig. 5 erläutert worden, die lediglich ein Beispiel darstellt. Auf der Abszissenachse ist die Zeit aufgetragen, und zwar in linearer Teilung. Die Länge der Abszissenachse mag der Zeitspanne von 25 Minuten entsprechen. Auf der Ordinatenachse ist, ebenfalls linear, die Temperatur aufgetragen. Die Länge der Ordinatenachse mag 100° C entsprechen. Die graphische Darstellung insgesamt beschreibt das Verhalten eines erfindungsgemäßen Kraftfahrzeug-Wärmespeichers in einem Spiel aus Aufladung und Entladung. Die ausgezogen gezeichnete Kurve gibt die Temperatur eines zulaufenden heißen Wassers wieder. Die strichpunktierte Kurve bis zum Punkt S die Aufladung des Kraftfahrzeug-Wärmespeichers in Wattstunden. Bei dem Punkt S ist eine Aufladung auf etwa 600 Wattstunden erreicht und die Speicherkapazität erschöpft. Der Kraftfahrzeug-Wärmespeicher hat die entsprechende Wärmemenge aus dem zulaufenden heißen Wasser entnommen. Die gestrichelte Kurve gibt die Temperatur des aus dem Kraftfahrzeug-Wärmespeicher bei der Entladung austretenden Wassers an. Sie steigt von ihrer Einlauftemperatur mit dem Einschalten der Entladung zunächst schnell und dann langsamer bis auf die Temperatur der gespeicherten Wärmemenge, die mit der Temperatur des zur Aufladung zugeführten heißen Wassers praktisch übereinstimmt. Dieser gesamte Bereich ist der Bereich der Phasenumwandlung im Kraftfahrzeug-Wärmespeicher. Die Temperatur des aus dem Kraftfahrzeug-Wärmespeicher bei der Entladung austretenden Wassers fällt danach steil ab. Die strichpunktierte Kurve ist bei dieser Entladung gleichsam invers zu betrachten. Die nach der Phasenumwandlung verbleibende Restwärmemenge sowie die Temperatur des aus dem Kraftfahrzeug-Wärmespeichers austretenden Wassers fallen nach der Phasenumwandlung steil ab.

## Patentansprüche

1. Kraftfahrzeug-Wärmespeicher mit einem Innenbehälter, einem Außenbehälter und einem Wärmeisolationsraum zwischen Innenbehälter und Außenbehälter,
wobei im Innenbehälter ein Paket aus im Grundriß rechteckigen, flachen Latentwärmespeicherzellen aus dünnem Blech angeordnet ist und zwischen den einzelnen Latentwärmespeicherzellen mit Hilfe von Abstandsspaltgittern Abstandszwischenräume ausgebildet sind, die im Betriebszustand von Kühlwasser als Wärmeträger durchflossen sind, wobei in den Latentwärmespeicherzellen ein Wärmespeichermedium angeordnet ist,
und wobei die Kombination der folgenden Merkmale verwirklicht ist:
a) Die Abstandsspaltzwischenräume besitzen eine Spaltdicke im Bereich zwischen 1 bis 3 mm,
b) die Latentwärmespeicherzellen besitzen eine Zellendicke im Bereich von 5 mm bis 8 mm und außenseitig eine glatte Oberfläche geringer Rauhigkeit,
c) das Paket der Latentwärmespeicherzellen besitzt eine Speicherkapazität von zumindest 400 Wattstunden bei einer Speichertemperatur von zumindest 70° C,
d) die Abstandsspaltgitter besitzen an den Latentwärmespeicherzellen anliegende Gitterelemente, die in Strömungsrichtung des Kühlwassers verlaufen, und quer dazu verlaufende freie Gitterelemente,
wobei die Spaltdicke und die Zellendicke so aufeinander abgestimmt sind, daß der Latentwärmespeicher sich aus der Speichertemperatur mit einer Entladegeschwindigkeit von zumindest 100 Wattstunden/min entlädt, wobei die freien Gitterelemente so angeordnet sind, daß bei der zu der Entladungsgeschwindigkeit gehörenden Strömungsgeschwindigkeit des Kühlwassers an den freien Gitterelementen eine turbulente Strömung entsteht, und wobei die an den Latentwärmespeicherzellen anliegenden Gitterelemente die aus der Phasenumwandlung des Speichermediums resultierenden Volumenänderungen der Latentwärmespeicherzellen ausgleichend aufnehmen, ohne die Turbulenzbildung an den freien Gitterelementen zu beeinträchtigen.

2. Kraftfahrzeug-Wärmespeicher nach Anspruch 1, wobei bei der Entladung in zwei Minuten zumindest 50 % der gespeicherten Wärmemenge an das Kühlwaser abgegeben werden.

3. Kraftfahrzeug-Wärmespeicher nach den Ansprüchen 1 oder 2, wobei die Latentwärmespeicherzellen Bariumhydroxid-Oktahydrat oder Mischungen davon auf Basis von Bariumhydroxid-Oktahydrat als Speichermedium aufweisen.

4. Kraftfahrzeug-Wärmespeicher nach einem der Ansprüche 1 bis 3, wobei Latentwärmespeicherzellen in dem Innenbehälter im wesentlichen horizontal angeordnet sind.

5. Kraftfahrzeug-Wärmespeicher nach einem der Ansprüche 1 bis 4, wobei die Latentwärmespeicherzellen aus dünnem Kupferblech bestehen.

6. Kraftfahrzeug-Wärmespeicher nach einem der Ansprüche 1 bis 5, wobei die Latentwärmespeicherzellen in Strömungsrichtung des Kühlwassers eine Länge von maximal 500 mm aufweisen und aus einem Blech der Dicke von 0,1 bis 0,15 mm bestehen.

7. Kraftfahrzeug-Wärmespeicher nach einem der Ansprüche 1 bis 6, wobei die Spaltdicke etwa 1,5 mm beträgt.

8. Kraftfahrzeug-Wärmespeicher nach einem der Ansprüche 1 bis 7, wobei die Zellendicke etwa 6,5 mm beträgt.

9. Kraftfahrzeug-Wärmespeicher nach einem der Ansprüche 1 bis 8, wobei die einzelnen Latentwärmespeicherzellen eine Speicherkapazität von 30 bis 70 Wattstunden aufweisen.

10. Kraftfahrzeug-Wärmespeicher nach einem der Ansprüche 1 bis 9, wobei die Entladegeschwindigkeit etwa 120 Wattstunden/min beträgt.

11. Kraftfahrzeug-Wärmespeicher nach einem der Ansprüche 1 bis 10, wobei die freien Gitterelemente so ausgebildet und angeordnet sind, daß sich in der Kühlflüssigkeit ein Spektrum homogener isotroper Turbulenz ausbildet.

12. Kraftfahrzeug-Wärmespeicher nach einem der Ansprüche 1 bis 10, wobei die freien Gitterelemente sowie die anliegenden Gitterelemente runde Querschnitte und/oder rechteckige Querschnitt mit verrundeten Ecken aufweisen und die Kreuzungsecken zwischen den freien Gitterelementen und den anliegenden Gitterelementen ebenfalls Verrundungen besitzen.
